# EUROPEAN PATENT APPLICATION

(11) **EP 4 317 332 A1**
(43) Date of publication of application: **07.02.2024**
(21) Application number: 22775261.5
(22) Date of filing: 15.03.2022
(51) Int. Cl.: C09D 123/26, B32B 27/32, C09D 5/00, C09D 7/20, H01B 7/08, C09D 151/00

(54) **COATING MATERIAL, COATING FILM, LAYERED PRODUCT, AND FLEXIBLE FLAT CABLE**

(30) Priority: 23.03.2021 JP 2021048049
(71) Applicant: Riken Technos Corporation, Tokyo 101-8336 (JP)
(72) Inventor: NAKAJIMA, Shoko, Tokyo 101-8336 (JP)
(74) Representative: J A Kemp LLP
(86) International application number: PCT/JP2022/011523
(87) International publication number: WO 2022/202471

(57) **Abstract**

Disclosed is a coating material comprising 100 parts by mass of an acid-modified polypropylene (A) and at least 450 parts by mass of organic solvents (B), wherein the acid-modified polypropylene has a melting point of 90°C or lower and the organic solvents (B) comprises 80-99 mass% aromatic hydrocarbon solvent (B1) and 20-1 mass% one or more solvents (B2) selected from the group consisting of ester-based solvents, ketone-based solvents, and alcohol-based solvents, the sum of the proportion of the ingredient (B1) and the proportion of the ingredient (B2) being 100 mass%. The coating material may further contain a compound (C) having, in the molecule, two or more functional groups capable of forming a chemical bond with a carboxyl group, in an amount of 0.1-20 parts by mass. The compound (C) having, in the molecule, two or more functional groups capable of forming a chemical bond with a carboxyl group may be one having no hydrolyzable group. Also disclosed are: a coating film formed from the coating material; a layered product comprising the coating film and a substrate film; and a flexible flat cable including the layered product.

## Description

### TECHNICAL FIELD

The present invention relates to a coating material, a coating film, a laminate, and a flexible flat cable.

### BACKGROUND ART

Conventionally, a flexible flat cable has been used for wiring of electronic devices such as a computer, an image display device, a mobile phone, a smartphone, a printer, a car navigation system, and a copier. The flexible flat cable is a cable having a structure in which a plurality of arranged conductors is sandwiched and covered by an insulating adhesive laminate provided with an adhesive resin composition layer, typically a polyester-based hot melt adhesive layer, on one surface of an insulating substrate film.

In recent years, flexible flat cables have come to be used also for electronic devices installed outside a vehicle, for example, a millimeter wave radar and an in-vehicle camera and in applications where high temperature and humidity environments are expected, such as home appliances that generate water vapor, for example, a rice cooker, an electric hot water dispenser, and a microwave oven. However, it has been found that when a polyester-based resin composition is used as the adhesive resin composition, the resistance to moisture and heat is insufficient, and that when it is used in a high temperature and high humidity environment, there has been a problem that the laminate may be peeled from the conductor and the conductor may be exposed, which is significantly disadvantageous. Thus, the present applicant has proposed using a polyolefin-based resin composition as the adhesive resin composition instead of the polyester-based resin composition (see, for example, WO 2016/181880 and WO 2018/042995 (Patent Literatures 1 and 2)). WO 2016/047289 A, WO 2014/185332 A, and WO 2019/171709 A (Patent Literatures 3 to 5) also disclose other polyolefin-based resin compositions used as adhesive resin compositions.

In recent years, from the viewpoint of making the flexible flat cable cable conform to a standard of higher rated temperatures, it has been studied to use a polyethylene naphthalate resin film, a polyimide resin film, a polyphenylene sulfide resin film, and the like in replacement of a polyethylene terephthalate resin film as the insulating substrate film. However, there has been a disadvantage that the interlayer adhesive strength between an adhesive resin composition layer of the polyolefin-based resin composition and the polyethylene naphthalate resin film or the like is insufficient.

### CITATION LIST

### PATENT LITERATURE

PATENT LITERATURE 1: WO2016/181880A
PATENT LITERATURE 2: WO2018/042995A
PATENT LITERATURE 3: WO2016/047289A
PATENT LITERATURE 4: WO2014/185332A
PATENT LITERATURE 5: WO2019/171709A

### SUMMARY OF INVENTION

### TECHNICAL PROBLEM

It is an object of the present invention to provide a novel coating material that has not been developed in the prior art, and a coating film, a laminate, and a flexible flat cable formed from the coating material.

It is a further object of the present invention to provide a coating material capable of forming a coating film suitable as an anchor coat, and a coating film, a laminate, and a flexible flat cable formed from the coating material.

### SOLUTION TO PROBLEM

Aspects of the present invention are as follows.
[1]. A coating material comprising:
   (A) 100 parts by mass of an acid-modified polypropylene; and
   (B) 450 parts by mass or more of an organic solvent, in which
      the acid-modified polypropylene (A) has a melting point of 90°C or lower, and
      the organic solvent (B) comprises:
         (B 1) 80-99% by mass of an aromatic hydrocarbon solvent; and
         (B2) 20-1% by mass of one or more solvents selected from the group consisting of an ester solvent, a ketone solvent, and an alcohol solvent,
         provided that a sum of a blending ratio of the aromatic hydrocarbon solvent (B 1) and a blending ratio of the solvent (B2) is 100% by mass.
[2]. The coating material according to [1], further comprising (C) 0.1-20 parts by mass of a compound having, in one molecule, two or more functional groups capable of forming a chemical bond with a carboxyl group.
[3]. The coating material according to [2], in which the compound (C) having, in one molecule, two or more functional groups capable of forming a chemical bond with a carboxyl group has no hydrolyzable group.
[4]. The coating material according to any one of [1] to [3], in which the organic solvent (B) comprises: (B 1) 92-99% by mass of an aromatic hydrocarbon solvent; and (B2) 8-1% by mass of one or more solvents selected from the group consisting of an ester solvent, a ketone solvent, and an alcohol solvent.
[5]. The coating material according to [4], in which (B2) the one or more solvents selected from the group consisting of an ester solvent, a ketone solvent, and an alcohol solvent have a water solubility of 5 g or more or are water soluble.
[6]. The coating material according to any one of [1] to [5], in which an acid-modified amount of the acid-modified polypropylene (A) is 0.1-2.8% by mass.
[7]. A coating film formed from the coating material according to any one of [1] to [6].
[8]. The coating film according to [7], in which the coating film has a thickness of 0.05 µm or more and less than 5 µm.
[9]. A coating film formed from a coating material containing (A) an acid-modified polypropylene in a solids content of 70% by mass or more,
   in which the coating film has a thickness of 0.05 µm or more and less than 5 µm.
[10]. The coating film according to [9], in which
   the coating material containing (A) an acid-modified polypropylene in a solids content of 70% by mass or more comprises:
   (A) 100 parts by mass of the acid-modified polypropylene; and
   (C) 0.1-20 parts by mass of a compound having, in one molecule, two or more functional groups capable of forming a chemical bond with a carboxyl group.
[11]. The coating film according to [10], in which the compound (C) having, in one molecule, two or more functional groups capable of forming a chemical bond with a carboxyl group has no hydrolyzable group.
[12]. A laminate comprising a substrate film and the coating film according to any one of [7] to [11] formed on at least one surface of the substrate film,
   in which the coating film is directly formed on the surface of the substrate film.
[13]. The laminate according to [12], in which the substrate film is a polyethylene naphthalate resin film, a polyimide resin film, or a polyphenylene sulfide resin film.
[14]. The laminate according to [12] or [13], comprising the coating film and an adhesive resin layer in this order on at least one surface of the substrate film.
[15]. The laminate according to [14], in which the adhesive resin layer is a layer of a polyolefin-based hot melt adhesive.
[16].
   A flexible flat cable comprising the laminate according to any one of claims [12] to [15].

### ADVANTAGEOUS EFFECTS OF INVENTION

According to the present invention, a novel coating material that has not been developed in the prior art, and a coating film, a laminate, and a flexible flat cable formed from the coating material are provided. A preferred coating material of the present invention may further have excellent storage stability. A preferred coating film of the present invention can exhibit excellent adhesive strength to any of an adhesive resin composition layer of a polyolefin-based resin composition, a polyethylene naphthalate resin film, a polyimide resin film, and a polyphenylene sulfide resin film. A preferred coating film of the present invention can further exhibit good adhesive strength in a high temperature and high humidity environment to any of the adhesive resin composition layer of the polyolefin-based resin composition, the polyethylene naphthalate resin film, the polyimide resin film, and the polyphenylene sulfide resin film.

The coating material of the present invention may be suitable as a coating material for forming an anchor coat. A preferred coating material of the present invention can be particularly suitably used as a coating material for forming an anchor coat for enhancing the interlayer adhesive strength between an adhesive resin composition layer of a polyolefin-based resin composition of a flexible flat cable cable and a polyethylene naphthalate resin film or the like.

### BRIEF DESCRIPTION OF DRAWINGS

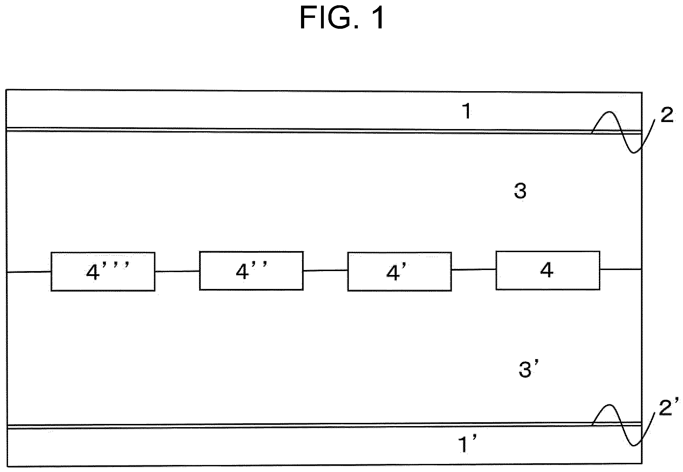

FIG. 1 is a conceptual cross-sectional view illustrating one embodiment of a flexible flat cable of the present invention.

### DESCRIPTION OF EMBODIMENTS

In the present specification, the term "resin" is used as a term encompassing a resin mixture containing two or more resins and a resin composition containing a component(s) other than resins.

In the present specification, the term "film" is used mutually changeably or mutually replaceably with "sheet". In the present specification, the terms "film" and "sheet" are used for those that can be industrially wound into a roll. The term "plate" is used for those that cannot be industrially wound into a roll. In the present specification, sequentially laminating one layer and another layer means both directly laminating the layers and laminating the layers with one or more other layers such as an anchor coat interposed between the layers.

The term "or more" for a numerical range is used to mean a certain numerical value or a numerical value exceeding the certain numerical value. For example, 20% or more means 20% or a value exceeding 20%. The term "or less" for a numerical range is used to mean a certain numerical value or a numerical value less than the certain numerical value. For example, 20% or less means 20% or a value less than 20%. Furthermore, the symbol "-" (or "to") for a numerical range is used to mean a certain numerical value, a numerical value greater than the certain numerical value and less than another numerical value, or the other numerical value. Here, the other numerical value is a numerical value greater than the certain numerical value. For example, 10-90% means 10%, greater than 10% and less than 90%, or 90%. Moreover, the upper limit and the lower limit of the numerical range may be desirably combined, and it should be understood that there are embodiments having any combination. For example, it should be understood that the numerical range of a certain characteristic is 10-40%, 20-30%, 10-30%, or 20-40% in one embodiment from the description "the numerical range of a certain characteristic is usually 10% or more, and preferably 20% or more, on the other hand, it is usually 40% or less, and preferably 30% or less" or "the numerical range of a certain characteristic is usually 10-40%, and preferably 20-30%".

Except for the examples or unless otherwise specified, all numerical values used in the present specification and claims should be understood as being modified by the term "about". Without intending to limit the application of the doctrine of equivalents to the scope of the claims, each numerical value should be interpreted in light of significant figures and by applying ordinary rounding techniques.

In the present specification, terms that specify shapes and geometric conditions, for example, terms such as parallel, orthogonal, and perpendicular, are intended to include substantially the same state in addition to strict meaning.

### 1. Coating material

The coating material of the present invention contains (A) an acid-modified polypropylene. In one embodiment, the coating material of the present invention contains (A) an acid-modified polypropylene and (B) an organic solvent. In one preferred embodiment, the organic solvent of component (B) includes (B 1) an aromatic hydrocarbon solvent and (B2) one or more solvents selected from the group consisting of an ester solvent, a ketone solvent, and an alcohol solvent. In another preferred embodiment, the coating material of the present invention may contain (A) an acid-modified polypropylene and (B) an organic solvent including (B1) an aromatic hydrocarbon solvent and (B2) one or more solvents selected from the group consisting of an ester solvent, a ketone solvent, and an alcohol solvent, and may not contain an organic solvent other than the organic solvent (B).

In another embodiment, the coating material of the present invention contains (A) an acid-modified polypropylene in a solids content of 70% by mass or more. In one preferred embodiment, the coating material of the present invention contains (A) an acid-modified polypropylene and (B) an organic solvent including (B 1) an aromatic hydrocarbon solvent and (B2) one or more solvents selected from the group consisting of an ester solvent, a ketone solvent, and an alcohol solvent, and contains the acid-modified polypropylene (A) in a solids content of 70% by mass or more.

In one preferred embodiment, the coating material of the present invention further contains (C) a curing agent (which may be preferably a compound having, in one molecule, two or more functional groups capable of forming a chemical bond with a carboxyl group). In one preferred embodiment, the coating material of the present invention contains (A) an acid-modified polypropylene, (B) an organic solvent including (B 1) an aromatic hydrocarbon solvent and (B2) one or more solvents selected from the group consisting of an ester solvent, a ketone solvent, and an alcohol solvent, and (C) a curing agent (which may be preferably a compound having, in one molecule, two or more functional groups capable of forming a chemical bond with a carboxyl group). In another preferred embodiment, the coating material of the present invention contains (A) an acid-modified polypropylene, (B) an organic solvent including (B 1) an aromatic hydrocarbon solvent and (B2) one or more solvents selected from the group consisting of an ester solvent, a ketone solvent, and an alcohol solvent, and (C) a curing agent (which may be preferably a compound having, in one molecule, two or more functional groups capable of forming a chemical bond with a carboxyl group), and contains the acid-modified polypropylene (A) in a solids content of 70% by mass or more. Each component will be described below.

### (A) Acid-modified polypropylene

The coating material of the present invention contains an acid-modified polypropylene of component (A). The acid-modified polypropylene of component (A) is a polypropylene-based resin in which an unsaturated carboxylic acid or an unsaturated carboxylic acid derivative is copolymerized, usually graft-copolymerized (hereinafter, sometimes referred to as "acid-modified"). Since the acid-modified polypropylene of component (A) is one in which an unsaturated carboxylic acid or an unsaturated carboxylic acid derivative is copolymerized, the acid-modified polypropylene functions to exhibit excellent adhesive strength to any of a polyethylene naphthalate resin film, a polyimide resin film, and a polyphenylene sulfide resin film. Since the acid-modified polypropylene of component (A) is a polypropylene-based resin, it functions to develop excellent adhesive strength to an adhesive resin composition layer of a polyolefin-based resin composition.

The melting point of the acid-modified polypropylene of component (A) is appropriately selected from the viewpoint of solubility in the preparation of a coating material and the viewpoint of adhesive strength of the coating film in a high temperature and high humidity environment. The melting point of the acid-modified polypropylene of component (A) may be usually 90°C or lower, preferably 85°C or lower, and more preferably 82°C or lower from the viewpoint of solubility in the preparation of a coating material. On the other hand, the melting point may be preferably 60°C or higher, more preferably 68°C or higher, and still more preferably 70°C or higher from the viewpoint of adhesive strength of the coating film in a high temperature and high humidity environment.

In the present specification (including examples), the melting point is calculated from a second melting curve (i.e. a melting curve measured in the last temperature rising process) measured by a program in which the temperature is held at 30°C for 5 minutes, then raised to 240°C at 20°C/min, held at 240°C for 5 minutes, then lowered to -50°C at -10°C/min, held at - 50°C for 5 minutes, and then raised to 240°C at 10°C/min using a differential scanning calorimeter (DSC analyzer) in accordance with JIS K 7121-1987. At this time, the melting point is a peak top temperature of a melting peak appearing in the second melting curve. When two or more melting peaks are observed, the peak top temperature of the melting peak having the maximum peak top height is defined as the melting point.

The acid-modified amount of the acid-modified polypropylene of component (A) (i.e., the content of the structural unit derived from the copolymerized unsaturated carboxylic acid or unsaturated carboxylic acid derivative based on 100% by mass of the total mass of the acid-modified polypropylene) can be appropriately determined from the viewpoints of adhesive strength of the coating film and storage stability of the coating material in consideration of the type of the unsaturated carboxylic acid or unsaturated carboxylic acid derivative copolymerized and the type of other components contained in the coating material. Typically, the acid-modified amount of the acid-modified polypropylene of component (A) may be usually 0.1% by mass or more and 5.0% by mass or less, preferably 0.1% by mass or more and 3.5% by mass or less, 0.1% by mass or more and 3.0% by mass or less, 0.5% by mass or more and 5.0% by mass or less, 0.5% by mass or more and 3.5% by mass or less, 0.5% by mass or more and 3.0% by mass or less, 1.0% by mass or more and 5.0% by mass or less, 1.0% by mass or more and 3.5% by mass or less, or 1.0% by mass or more and 3.0% by mass or less. When the copolymerized unsaturated carboxylic acid derivative is maleic anhydride and a compound having two or more epoxy groups in one molecule is contained as the curing agent of component (C), the acid-modified amount of the acid-modified polypropylene of component (A) may be usually 0.1% by mass or more, preferably 0.5% by mass or more, more preferably 1.0% by mass or more, and still more preferably 1.5% by mass or more from the viewpoint of adhesive strength of the coating film. On the other hand, the acid-modified amount of the acid-modified polypropylene of component (A) in this case may be usually 5.0% by mass or less, preferably 3.5% by mass or less, more preferably 2.8% by mass or less, and still more preferably 2.5% by mass or less from the viewpoint of storage stability of the coating material. When the acid-modified polypropylene of component (A) is a mixture of two or more acid-modified polypropylene-based resins, the acid-modified amount of the mixture may be within the above range. One or a mixture of the acid-modified polypropylenes of component (A) may be mixed with a non-acid-modified polypropylene-based resin (with an acid-modified amount of 0% by mass) as long as it is in a small amount (usually less than 50% by mass, preferably 20% by mass or less, and more preferably 10% by mass or less). Also in this case, the acid-modified amount as the mixture may be within the above range.

The acid-modified amount of the acid-modified polypropylene of component (A) can be determined using a ¹³C-NMR spectrum. The ¹³C-NMR spectrum can be measured, for example, using a nuclear magnetic resonance instrument under the following conditions.
Sample concentration: 60 mg/NMR solvent 0.6 mL
NMR solvent: mixed solvent of 1,2,4-trichlorobenzene/benzene-d6 (90 vol%/10 vol%) Measurement temperature: 130°C
Pulse width: 45° (5.0 µs)
Repetition time: 4 seconds

The method for producing the acid-modified polypropylene of component (A) is not particularly limited, and the acid-modified polypropylene can be produced by a known method. As an example of the method for producing the acid-modified polypropylene of component (A), there may be mentioned a method in which the acid-modified polypropylene is produced by melt-kneading a resin composition containing (p) a polypropylene-based resin, (q) one or more compounds selected from the group consisting of an unsaturated carboxylic acid and an unsaturated carboxylic acid derivative, and (r) an organic peroxide to graft component (q) to component (p). At this time, the melt-kneading can be performed for preferably 1 minute or more at a temperature equal to or higher than a one-minute half-life temperature of component (r), and more preferably 2 minutes or more at a temperature equal to or higher than the one-minute half-life temperature of component (r) from the viewpoint that component (q) and component (r) completely react and do not remain unreacted in the acid-modified polypropylene of component (A) to be produced. Here, the one-minute half-life temperature is the temperature at which the half-life is one minute, that is, it means that when the -O-O- bond in the above (r) is decomposed at this temperature, the time required for the current concentration of the bond to be half the initial concentration is one minute.

Examples of the polypropylene-based resin of component (p) include a propylene homopolymer; a copolymer (including block copolymer and random copolymer) of propylene with a small amount of another α-olefin (for example, ethylene, 1-butene, 1-hexene, 1-octene, or 4-methyl-1 pentene).

The melting point of the polypropylene-based resin of component (p) may be preferably 60-90°C, more preferably 68-90°C or 68-85°C, and still more preferably 70-85°C or 70-82°C from the viewpoint that the melting point of the acid-modified polypropylene of component (A) falls within the above-mentioned preferable range. Such a polypropylene-based resin may have a structure in which the stereoregularity of the propylene chain is low (the mm fraction is usually about 50-80 mol%), the α-olefin as the comonomer is randomly copolymerized in a relatively large amount (depending on the type of the α-olefin, usually about 5-35 mol%), error insertion of propylene (2-1 insertion or 1-3 insertion) is contained in a relatively large amount (usually about 5-35 mol%), or a combination thereof is included. The definition of the melting point and the measurement method are described above.

One or a mixture of two or more thereof can be used as the polypropylene-based resin of component (p).

Examples of the unsaturated carboxylic acid of component (q) include maleic acid, itaconic acid, fumaric acid, acrylic acid, and methacrylic acid. Examples of the derivative of the unsaturated carboxylic acid of component (q) include esters of unsaturated polycarboxylic acids such as maleic acid monoester, itaconic acid monoester, and fumaric acid monoester, which are compounds having one or more carboxyl groups; acid anhydrides of unsaturated carboxylic acids such as maleic anhydride, itaconic anhydride, and fumaric anhydride; unsaturated carboxylic acid diesters such as maleic acid diesters, itaconic acid diesters, and fumaric acid diesters; alkyl acrylates such as methyl acrylate; and alkyl methacrylates such as methyl methacrylate. As the one or more compounds selected from the group consisting of an unsaturated carboxylic acid and an unsaturated carboxylic acid derivative of component (q), an unsaturated carboxylic acid and an ester of an unsaturated polycarboxylic acid, which are compounds having one or more carboxyl groups, and an acid anhydride of an unsaturated carboxylic acid are preferable from the viewpoint of adhesive strength of the coating film. An unsaturated carboxylic acid and an acid anhydride of an unsaturated carboxylic acid are more preferable, and maleic anhydride is still more preferable.

One or a mixture of two or more thereof can be used as the one or more compounds selected from the group consisting of an unsaturated carboxylic acid and an unsaturated carboxylic acid derivative of component (q).

The blending amount of the one or more compounds selected from the group consisting of an unsaturated carboxylic acid and an unsaturated carboxylic acid derivative of component (q) can be appropriately determined from the viewpoint that component (q) completely reacts during melt kneading and does not remain unreacted in the acid-modified polypropylene of component (A) to be produced, and from the viewpoint that the acid-modified amount of the acid-modified polypropylene of component (A) falls within the above-mentioned preferable range. The blending amount of the one or more compounds selected from the group consisting of an unsaturated carboxylic acid and an unsaturated carboxylic acid derivative of component (q) may be usually 0.1-5 parts by mass, preferably 0.5-3.5 parts by mass, more preferably 1-2.8 parts by mass, and still more preferably 1.5-2.5 parts by mass based on 100 parts by mass of the polypropylene-based resin of component (p).

Examples of the organic peroxide of component (r) include dicumyl peroxide, di-tert-butyl peroxide, 2,5-dimethyl-2,5-di-(tert-butylperoxy)hexane, 2,5-dimethyl-2,5-di(tert-butylperoxy)hexyne-3, 1,3-bis(tert-butylperoxyisopropyl)benzene, 1,1-bis(tert-butylperoxy)-3,3,5-trimethylcyclohexane, n-butyl-4,4-bis(tert-butylperoxy)valerate, benzoyl peroxide, p-chlorobenzoyl peroxide, 2,4-dichlorobenzoyl peroxide, tert-butyl peroxybenzoate, tert-butyl peroxyisopropyl carbonate, diacetyl peroxide, lauroyl peroxide, and tert-butyl cumyl peroxide. As the organic peroxide of component (r), 2,5-dimethyl-2,5-di-(tert-butylperoxy)hexane and 2,5-dimethyl-2,5-di-(tert-butylperoxy)hexyne-3 are preferable from the viewpoint of adhesive strength.

One or a mixture of two or more thereof can be used as the organic peroxide of component (r).

The blending amount of the organic peroxide of component (r) can be appropriately determined from the viewpoint that component (q) and component (r) completely react and do not remain unreacted in the acid-modified polypropylene of component (A) to be produced, and from the viewpoint that a decrease in the molecular weight of the polypropylene-based resin of component (p) is suppressed. The blending amount of the organic peroxide of component (r) may be usually 0.05-1.5 parts by mass, preferably 0.2-1.3 parts by mass, and more preferably 0.5-1.0 parts by mass based on 100 parts by mass of the polypropylene-based resin of component (p).

In another embodiment, the coating material of the present invention may contain the acid-modified polypropylene of component (A) in a solids content of preferably 70% by mass or more, more preferably 80% by mass or more, and still more preferably 90% by mass or more. By using such a coating material, a coating film exhibiting excellent adhesive strength to any of a polyethylene naphthalate resin film, a polyimide resin film, a polyphenylene sulfide resin film, and an adhesive resin composition layer of a polyolefin-based resin composition can be formed.

### (B) Organic solvent

In one embodiment, the coating material of the present invention contains an organic solvent of component (B) in addition to the acid-modified polypropylene of component (A). The organic solvent of component (B) is not particularly limited as long as it contributes to the dissolution of the acid-modified polypropylene of component (A). Examples of the organic solvent of component (B) include an aromatic hydrocarbon solvent, an aliphatic hydrocarbon solvent, an alicyclic hydrocarbon solvent, an alcohol solvent, a ketone solvent, an ester solvent, and a halogenated solvent in which at least one of hydrogen atoms of these solvents is substituted with a halogen atom such as a chlorine atom.

One or a mixture of two or more thereof can be used as the organic solvent of component (B).

In one typical embodiment, the organic solvent of component (B) may be composed of (B1) an aromatic hydrocarbon solvent and (B2) one or more solvents selected from the group consisting of an ester solvent, a ketone solvent, and an alcohol solvent (hereinafter, sometimes abbreviated as an "ester solvent and the like"). In one preferred embodiment, in the coating material according to the present invention, the content of the organic solvent other than the (B1) or (B2) in the organic solvent of component (B) may be preferably 10% by mass or less, more preferably 4% by mass or less, still more preferably 1% by mass or less, and most preferably 0% by mass (that is, the organic solvent of component (B) does not contain any organic solvent other than the organic solvents (B 1) or (B2)).

The aromatic hydrocarbon solvent of component (B 1) can dissolve the acid-modified polypropylene of component (A), but has a disadvantage that storage stability is low (gelation easily occurs). The ester solvent and the like of component (B2) are less likely to dissolve the acid-modified polypropylene of component (A). That is, the ester solvent and the like of component (B2) are poor solvents for the acid-modified polypropylene of component (A). In order to enhance the storage stability of the coating material, it is common technical knowledge to use a good solvent, but it is very surprising that the storage stability can be enhanced by including a small amount of poor solvent (in other words, the above-described disadvantage can be solved thereby).

Although not intending to be bound by theory, the acid-modified moiety of the acid-modified polypropylene of component (A) has low compatibility with the aromatic hydrocarbon solvent of component (B 1), and thus the acid-modified moieties can gather and interact with each other to enhance gelation. It is considered that when a small amount of the ester solvent and/or the like of component (B2) is added thereto, the ester groups, the ketone groups, and/or the hydroxyl groups of component (B2) can gather around the acid-modified moiety of component (A), and the distance between the acid-modified moieties can be increased to suppress gelation.

The aromatic hydrocarbon solvent of component (B 1) is a hydrocarbon solvent having an aromatic ring. The aromatic hydrocarbon solvent of component (B 1) is not particularly limited, and examples thereof include toluene, xylene, ortho-xylene, and benzene. Among them, component (B 1) is preferably a hydrocarbon solvent having an aromatic ring and not having any of an ester group, a ketone group, or a hydroxyl group (including both an alcoholic hydroxyl group and a phenolic hydroxyl group), more preferably toluene, xylene, or ortho-xylene, and still more preferably toluene, from the viewpoints of solubility of the acid-modified polypropylene of component (A) in the preparing the coating material and storage stability of the coating material.

One or a mixture of two or more thereof can be used as the aromatic hydrocarbon solvent of component (B 1).

The ester solvent of component (B2) is an aliphatic hydrocarbon compound (not having an aromatic ring) having one or more ester groups in one molecule, which is liquid in the standard state (temperature: 25°C, pressure: 100 KPa, the same applies hereinafter). Examples of the ester solvent include acetic acid esters such as methyl acetate, ethyl acetate, n-propyl acetate, 1-methylethyl acetate, n-butyl acetate, 2-methylpropyl acetate, 1-methylpropyl acetate, and tert-butyl acetate; and lactic acid esters such as methyl lactate (methyl 2-hydroxypropionate), ethyl lactate (ethyl 2-hydroxypropionate), and butyl lactate (n-butyl 2-hydroxypropionate).

The ketone solvent of component (B2) is an aliphatic hydrocarbon compound (not having an aromatic ring) having one or more ketone groups in one molecule, which is liquid in the standard state. Examples of the ketone solvent include acetone, methyl ethyl ketone, methyl propyl ketone, methyl isobutyl ketone, diisobutyl ketone, cyclohexanone, and diacetone alcohol.

The alcohol solvent of component (B2) is an aliphatic hydrocarbon compound (not having an aromatic ring) having one or more alcoholic hydroxyl groups in one molecule, which is liquid in the standard state. Examples of the alcohol solvent include methanol, ethanol, 1-propanol, 2-propanol (isopropyl alcohol), 1-butanol, 2-methyl-1-propanol (isobutyl alcohol), 2-butanol, 2-methyl-2-propanol (tert-butyl alcohol), 1-methoxy-2-propanol, 1-ethoxy-2-propanol, 1,3-butanediol, 1,4-butanediol, 2-ethylhexanol, ethylene glycol, propylene glycol, methyl cellosolve, butyl cellosolve, and propylene glycol monomethyl ether.

In addition, an ester solvent having an alcoholic hydroxyl group, such as methyl lactate, ethyl lactate, or butyl lactate, and a ketone solvent having an alcoholic hydroxyl group, such as diacetone alcohol, are compounds that can be also classified as alcohol solvents.

The water solubility of the ester solvent and the like of component (B2) may be preferably 5 g or more, and more preferably 8 g or more from the viewpoint of storage stability of the coating material. The ester solvent and the like of component (B2) may be water soluble from the viewpoint of storage stability of the coating material. Here, the water solubility is a mass (unit: g) of the substance which is dissolved in 100 mL of pure water at a temperature of 20°C, wherein being "dissolved" means that the mixed liquid can maintain a uniform appearance. The term "water soluble" means that it can be mixed with pure water of a temperature of 20°C at any ratio (i.e., the mixed liquid maintains a uniform appearance). Examples of such ester solvent and the like of component (B2) include methyl acetate (water solubility 24.4 g), ethyl acetate (water solubility 8.3 g), acetone (water soluble), methyl ethyl ketone (water solubility of 27.5 g), methanol (water soluble), ethanol (water soluble), 1-propanol (water soluble), 2-propanol (water soluble), 1-butanol (water solubility 7.7 g), 2-methyl-1-propanol (water solubility 10 g), 2-butanol (water solubility 26 g), 2-methyl-2-propanol (water soluble), 1,3-butanediol (water soluble), and 1,4-butanediol (water soluble).

One or a mixture of two or more thereof can be used as the ester solvent and/or the like of component (B2).

In an embodiment in which the organic solvent of component (B) includes the aromatic hydrocarbon solvent of component (B 1), and the ester solvent and the like of component (B2), the blending ratio of the aromatic hydrocarbon solvent of component (B 1) in the organic solvent of component (B) can be appropriately determined from the viewpoint that the acid-modified polypropylene of component (A) is dissolved and the viewpoint of storage stability of the coating material. From the viewpoint that the acid-modified polypropylene of component (A) is dissolved, the blending ratio of the aromatic hydrocarbon solvent of component (B 1) in the organic solvent of component (B) may be usually 80% by mass or more, preferably 86% by mass or more, and more preferably 92% by mass or more, provided that the sum of the blending ratio of component (B 1) and the blending ratio of component (B2) is 100% by mass. That is, the blending ratio of the ester solvent and the like of component (B2) in the organic solvent of component (B) may be usually 20% by mass or less, preferably 14% by mass or less, and more preferably 8% by mass or less from the viewpoint that the acid-modified polypropylene of component (A) is dissolved. On the other hand, the blending ratio of the aromatic hydrocarbon solvent of component (B 1) in the organic solvent of component (B) may be usually 99% by mass or less, and preferably 98% by mass or less from the viewpoint of storage stability of the coating material. That is, the blending ratio of ester solvent and the like of component (B2) in the organic solvent of component (B) may be usually 1% by mass or more, and preferably 2% by mass or more from the viewpoint of storage stability of the coating material.

The blending amount of the organic solvent of component (B) in the coating material can be appropriately determined from the viewpoint that the acid-modified polypropylene of component (A) is dissolved, the viewpoint of storage stability of the coating material, the viewpoint of coatability for forming a thin coating film, and the viewpoint of workability in a drying step for forming a coating film. From the viewpoint that the acid-modified polypropylene of component (A) is dissolved, the viewpoint of storage stability of a coating material, and the viewpoint of coatability for forming a thin coating film, the blending amount of the organic solvent of component (B) may be usually 450 parts by mass or more, preferably 500 parts by mass or more, and more preferably 550 parts by mass or more based on 100 parts by mass of component (A). On the other hand, the blending amount may be preferably 2000 parts by mass or less, more preferably 1200 parts by mass or less, and still more preferably 800 parts by mass or less from the viewpoint of workability in a drying step for forming a coating film.

### (C) Curing agent

In one embodiment, the coating material of the present invention contains a curing agent of component (C). The curing agent of component (C) is a compound having, in one molecule, two or more functional groups capable of forming a chemical bond with a carboxyl group. When the acid-modified polypropylene of component (A) has a carboxyl group, the curing agent of component (C) forms a chemical bond with the carboxyl group in component (A) to impart appropriate hardness to a coating film, and functions to suppress a decrease in adhesive strength of the coating film in a high temperature and high humidity environment. That is, this embodiment is particularly effective when the acid-modified polypropylene of component (A) has a carboxyl group or is modified with an acid anhydride of an unsaturated carboxylic acid such as maleic anhydride.

Examples of the functional group capable of forming a chemical bond with the carboxyl group include an epoxy group, an isocyanate group, and an amino group. Among them, as the functional group capable of forming a chemical bond with the carboxyl group, an epoxy group and an isocyanate group are preferable, and an epoxy group is more preferable from the viewpoints of storage property of the coating material and adhesive strength of the coating film.

Examples of the curing agent of component (C) include compounds having two or more epoxy groups in one molecule, such as 1,3-bis(N,N'-diglycidylaminomethyl)cyclohexane, N,N,N',N'-tetraglycidyl-m-xylylenediamine, diglycidylaniline, diglycidylamine, bisphenol A-epichlorohydrin type epoxy resin, ethylene glycol diglycidyl ether, polyethylene glycol diglycidyl ether, glycerin diglycidyl ether, glycerin triglycidyl ether, 1,6-hexanediol diglycidyl ether, and trimethylolpropane triglycidyl ether.

Examples of the curing agent of component (C) include compounds having two isocyanate groups in one molecule, such as hexamethylene diisocyanate, isophorone diisocyanate, tolylene diisocyanate, and methylenebis-4-cyclohexyl isocyanate; polyisocyanates having two or more isocyanate groups in one molecule, such as a trimethylolpropane adduct of tolylene diisocyanate, a trimethylolpropane adduct of hexamethylene diisocyanate, a trimethylolpropane adduct of isophorone diisocyanate, an isocyanurate of tolylene diisocyanate, an isocyanurate of hexamethylene diisocyanate, an isocyanurate of isophorone diisocyanate, and a biuret of hexamethylene diisocyanate; and compounds having two or more isocyanate groups in one molecule, such as a urethane crosslinking agent, for example, a blocked isocyanate of the polyisocyanate.

The curing agent of component (C) preferably has no hydrolyzable group from the viewpoint of adhesive strength of the coating film in a high temperature and high humidity environment. Examples of the hydrolyzable group include alkoxy groups such as a methoxy group, an ethoxy group, a propoxy group, and an isopropoxy group; acyloxy groups such as an acetoxy group; and halogen groups such as a chloro group.

The number of functional groups that are contained in one molecule of the curing agent of component (C) and can form a chemical bond with the carboxyl group can be appropriately determined in consideration of the type of the functional group from the viewpoint of storage stability of the coating material, the viewpoint that a decrease in adhesive strength of the coating film in a high temperature and high humidity environment is suppressed, and the viewpoint that increase in hardness of the coating film is suppressed within an appropriate range. The number of functional groups that are contained in one molecule of the curing agent of component (C) and can form a chemical bond with the carboxyl group may be usually 2-20 and preferably 3-12 when the functional group is an epoxy group. The number of functional groups that are contained in one molecule of the curing agent of component (C) and can form a chemical bond with the carboxyl group may be usually 2-20 and preferably 3-12 when the functional group is an isocyanate group.

One or a mixture of two or more thereof can be used as the curing agent of component (C).

The blending amount of the curing agent of component (C) can be appropriately determined in consideration of the type thereof from the viewpoint that the effect on use of the curing agent is reliably obtained, the viewpoint that increase in hardness of the coating film is suppressed within an appropriate range, and the viewpoint that occurrence of gelation is prevented until the coating material is applied after component (C) is mixed. The blending amount of the curing agent of component (C) may be usually 0.1 parts by mass or more, preferably 0.5 parts by mass or more, more preferably 1 part by mass or more, and still more preferably 2 parts by mass or more based on 100 parts by mass of the acid-modified polypropylene of component (A) from the viewpoint that the effect on use of the curing agent is reliably obtained. On the other hand, the blending amount thereof may be usually 20 parts by mass or less, preferably 15 parts by mass or less, and more preferably 10 parts by mass or less from the viewpoint that increase in hardness of the coating film is suppressed within an appropriate range and from the viewpoint that occurrence of gelation is prevented until the coating material is applied after the curing agent of component (C) is mixed.

The coating material of the present invention can further contain an optional component(s), if desired, other than the acid-modified polypropylene of component (A), the organic solvent of component (B), or the curing agent of component (C) as long as it does not impair the object of the present invention. Examples of the optional component include thermoplastic resins other than the acid-modified polypropylene of component (A); pigments, inorganic fillers, organic fillers, and resin fillers; and, additives such as lubricants, antioxidants, weather resistance stabilizers, heat stabilizers, release agents, antistatic agents, and surfactants. In one embodiment, the coating material of the present invention does not contain any component other than the acid-modified polypropylene of component (A), the organic solvent of component (B), or the curing agent of component (C). In another embodiment, the coating material of the present invention does not contain any thermoplastic resin other than the acid-modified polypropylene of component (A); a pigment, an inorganic filler, an organic filler, a resin filler, or one or more additives selected from a lubricant, an antioxidant, a weather resistance stabilizer, a heat stabilizer, a release agent, an antistatic agent, and a surfactant.

Examples of the thermoplastic resin other than the acid-modified polypropylene of component (A) include alkyl methacrylates such as methyl methacrylate, ethyl methacrylate, and butyl methacrylate; alkyl acrylates such as methyl acrylate, ethyl acrylate, and butyl acrylate; and a copolymer of a comonomer such as vinyl acetate with ethylene.

One or a combination of two or more thereof can be used as the optional component. The blending amount of the optional component may be usually 0 parts by mass or more and 20 parts by mass or less, and preferably 0 parts by mass or more and 10 parts by mass or less, or about 0.01-10 parts by mass based on 100 parts by mass of the acid-modified polypropylene of component (A).

The coating material of the present invention can be obtained by mixing and stirring these components. In an embodiment in which the curing agent as component (C) is used, the coating material of the present invention is preferably obtained by mixing and stirring components other than component (C), and then mixing and stirring the curing agent of component (C) immediately before the coating material is applied. It is thus possible to suppress a trouble such as occurrence of gelation before the coating material is applied.

### 2. Coating film

The coating film of the present invention is formed from the coating material of the present invention. The coating material of any embodiment described in Section 1 above can be used to form the coating film of the present invention. In one embodiment, the coating film of the present invention is formed from a coating material containing the acid-modified polypropylene of component (A) and the organic solvent of component (B), the organic solvent of component (B) including the aromatic hydrocarbon solvent of component (B1) and one or more solvents of component (B2) selected from the group consisting of an ester solvent, a ketone solvent, and an alcohol solvent. In another embodiment, the coating film of the present invention is formed from a coating material containing the acid-modified polypropylene of component (A) in a solids content of 70% by mass or more (that is, a coating material in which 70% by mass or more of the total mass of the solids content contained in the coating material is the acid-modified polypropylene). In still another embodiment, the coating film of the present invention is formed from a coating material containing the acid-modified polypropylene of component (A) in a solids content of 80% by mass or more.

The coating film of the present invention is formed on a surface of any type of substrate (or, base body) using the coating material of the present invention. In one typical embodiment, the coating film of the present invention is formed directly on a surface of any type of substrate using the coating material of the present invention. The coating material of the present invention is described above in "1. Coating material". The substrate will be described later in "3. Laminate".

The method for forming the coating film of the present invention on a surface of any type of substrate using the coating material of the present invention is not particularly limited, and a known method can be used. Examples of the method include rod coating, roll coating, gravure coating, reverse coating, kiss reverse coating, roll brushing, spray coating, air knife coating, solution casting, and die coating. When a substrate film is used as the substrate, from the viewpoint that a coating material is applied with high productivity by a roll-to-roll method, for example, methods such as rod coating, roll coating, gravure coating, reverse coating, kiss reverse coating, and die coating are preferable.

The thickness of the coating film of the present invention is appropriately determined from the viewpoint of adhesive strength and from the viewpoint of productivity in the formation of the coating film in consideration of the intended use. The thickness of the coating film of the present invention may be usually 0.05-30 µm, and preferably 0.05-10 µm, 0.05-5 µm, 0.1-30 µm, 0.1-10 µm, or 0.1-5 µm.

The thickness of the coating film of the present invention may be usually less than 5 µm, preferably 4 µm or less, more preferably 2 µm or less, and still more preferably 1.5 µm or less from the viewpoint of adhesive strength when the coating film is used as an anchor coat, particularly when the coating film is used as an anchor coat for enhancing the interlayer adhesive strength between an adhesive resin composition layer of a polyolefin-based resin composition and a polyethylene naphthalate resin film, a polyimide resin film, a polyphenylene sulfide resin film, or the like. On the other hand, in such a case, the thickness may be usually 0.05 µm or more, preferably 0.1 µm or more, and more preferably 0.3 µm or more from the viewpoint of productivity in the formation of the coating film.

Although not intending to be bound by theory, it is considered that when a coating film is used as an anchor coat, as long as the thickness of the coating film is thin (within the above range), the adhesive resin composition layer of the polyolefin-based resin composition and the polyethylene naphthalate resin film or the like can be integrated, by which the interlayer adhesive strength can be increased. From the viewpoint that both of them are integrated, it is considered that the coating film preferably may have a highly uniform thickness, and thus the method of forming the coating film by applying a coating material is more preferable than a melt extrusion film forming method.

### 3. Laminate

The laminate of the present invention includes any type of substrate and the coating film of the present invention formed on a surface of the substrate. The coating film of any embodiment described in Section 2 above can be used to form the laminate of the present invention. In one embodiment, the laminate of the present invention has the coating film of the present invention on at least one surface, usually on one surface of a substrate film that is selected as any type of substrate. In one typical embodiment, the laminate of the present invention has the coating film of the present invention on a surface of any type of substrate, and the coating film is directly formed on the surface of the substrate. The coating film of the present invention and the method for forming the coating film of the present invention on a surface of the substrate have been described above in "2. Coating film".

Examples of the substrate include a substrate film such as a resin film, a resin plate, a glass film, a glass plate, a metal foil, a metal plate, and a molded body which is made of resin, glass, or metal and has any desired shape.

Examples of the substrate film include any resin films of polyvinyl chloride-based resins; polyester-based resins such as aromatic polyesters and aliphatic polyesters, for example, polyethylene terephthalate resin films and polyethylene naphthalate resin films; polyolefin-based resins such as polyethylene, polypropylene, and polymethylpentene; acrylic resins; polycarbonate-based resins; poly(meth)acrylimide-based resins; styrene-based resins such as polystyrene, acrylonitrile-butadiene-styrene copolymer resins (ABS resins), styrene-ethylene-butadiene-styrene copolymers, styrene-ethylene-propylene-styrene copolymers, and styrene-ethylene-ethylene-propylene-styrene copolymers; cellulosic resins such as cellophane, triacetyl cellulose, diacetyl cellulose, and acetyl cellulose butyrate; polyvinylidene chloride-based resins; fluorine-containing resins such as polyvinylidene fluoride; and, in addition, polyvinyl alcohol, ethylene vinyl alcohol, polyether ether ketone, nylon, polyamide, polyimide, polyphenylene sulfide, polyurethane, polyether imide, polysulfone, and polyether sulfone. These films encompass an unstretched film, a uniaxially stretched film, and a biaxially stretched film. Further, these films encompass laminate films in which one or more kinds of these films are laminated in two or more layers.

When the laminate of the present invention is used for a flexible flat cable, the substrate film is preferably a polyethylene terephthalate resin film, a polyethylene naphthalate resin film, a polyimide resin film (typically, a polycondensate of an aromatic tetrabasic acid or a derivative thereof with an aromatic polyamine), or a polyphenylene sulfide resin film. When the laminate of the present invention is used for a flexible flat cable having a high rated temperature, the substrate film is preferably a polyethylene naphthalate resin film, a polyimide resin film, or a polyphenylene sulfide resin film, more preferably a polyethylene naphthalate resin film or a polyphenylene sulfide resin film.

The thickness of the substrate film can be appropriately determined in consideration of the application of the laminate of the present invention and in view of various required characteristics. When the laminate of the present invention is used as an insulating adhesive laminate of a flexible flat cable, the thickness of the substrate film can be appropriately determined from the viewpoint of ensuring the flexibility of the flexible flat cable, the viewpoint of strength of the flexible flat cable, and the viewpoint of workability during production of the flexible flat cable.

When the laminate of the present invention is used as an insulating adhesive laminate of a flexible flat cable, the thickness of the substrate film may be usually 10 µm or more, preferably 15 µm or more, and more preferably 20 µm or more from the viewpoint of strength of the flexible flat cable and from the viewpoint of workability during production of the flexible flat cable. On the other hand, the thickness of the substrate film in this case may be usually 200 µm or less, preferably 100 µm or less, and more preferably 50 µm or less from the viewpoint of securing the flexibility of the flexible flat cable.

When the laminate of the present invention is used as a reinforcing tape of a flexible flat cable (i.e., a tape to be bonded to the terminal of a conductor of a flexible flat cable and to reinforce the conductor terminal of the cable so that the conductor terminal can be connected to an electronic device as a connector), the thickness of the substrate film can be appropriately determined from the viewpoint of imparting rigidity and strength suitable for connector connection and the viewpoint of processability needed when the reinforcing tape is cut into a size and a shape suitable for connector connection. When the laminate of the present invention is used as a reinforcing tape for a flexible flat cable, the thickness of the substrate film may be usually 100 µm or more, preferably 125 µm or more, and more preferably 150 µm or more from the viewpoint of imparting rigidity and strength suitable for connector connection. On the other hand, the thickness of the substrate film in this case may be usually 500 µm or less, and preferably 250 µm or less from the viewpoint of processability needed when the reinforcing tape is cut into a size and a shape suitable for connector connection.

When the laminate of the present invention is used as an insulating adhesive laminate of a flexible flat cable, the laminate of the present invention may include the substrate film and the coating film of the present invention formed on one surface of the substrate film, and further may include a layer of an adhesive resin, preferably a layer of a hot melt adhesive, more preferably a layer of a flame-retardant hot melt adhesive, formed on a surface of the coating film. The thickness of the layer of the hot melt adhesive or the layer of the flame-retardant hot melt adhesive is not particularly limited, but may be usually 1 µm-300 µm, and preferably 2 µm-200 µm.

As the hot melt adhesive, a known hot melt adhesive, for example, a polyester-based hot melt adhesive (i.e., a thermoplastic polyester-based resin), a polyolefin-based hot melt adhesive (i.e., thermoplastic polyolefin-based resin), or the like can be used. As the flame-retardant hot melt adhesive, a known flame-retardant hot melt adhesive, for example, a flame-retardant polyester-based hot melt adhesive (i.e., a composition containing a thermoplastic polyester-based resin and a flame retardant), a flame-retardant polyolefin-based hot melt adhesive (i.e., a composition containing a thermoplastic polyolefin-based resin and a flame retardant), or the like can be used. When the flexible flat cable is used in an application in which a high temperature and high humidity environment is expected, the polyolefin-based hot melt adhesive or the flame-retardant polyolefin-based hot melt adhesive is preferable.

Preferred examples of these adhesives include, but are not particularly limited to, an adhesive resin composition described in WO 2016/181880 A, that is, "an adhesive resin composition containing (A) 20-70% by mass of an acid-modified polypropylene-based resin; (B) 20-60% by mass of a polypropylene-based resin; (C) 2-25% by mass of a copolymer of ethylene with one or more comonomers selected from the group consisting of vinyl acetate, an alkyl methacrylate, and an alkyl acrylate, provided that the sum of component (A), component (B), and component (C) is 100% by mass." and a resin composition described in WO 2018/042995 A, that is, "a resin composition for an adhesive layer of a laminate containing (A) 55-85% by mass of an acid-modified polypropylene-based resin; (B) 45-15% by mass of a copolymer of ethylene with one or more comonomers selected from the group consisting of vinyl acetate, an alkyl methacrylate, and an alkyl acrylate, provided that the sum of component (A) and component (B) is 100% by mass, and the acid-modified amount of component (A) is 0.5-10 mol%". The specification, claims, abstract, and drawings of each of WO 2016/181880 and WO 2018/042995 are incorporated herein by reference in their entirety.

### 4. Flexible flat cable

The flexible flat cable of the present invention includes the coating film of the present invention. The coating film of any embodiment described in Section 2 above can be used to form the flexible flat cable of the present invention. The flexible flat cable of the present invention includes the laminate of the present invention. The laminate of any embodiment described in Section 3 above can be used to form the flexible flat cable of the present invention. In one typical embodiment, the flexible flat cable cable of the present invention is produced using an insulating adhesive laminate including the substrate film, the coating film of the present invention formed on one surface of the substrate film, and the layer of the hot melt adhesive, preferably the flame-retardant hot melt adhesive, further formed on the surface of the coating film.

A method for producing the flexible flat cable of the present invention is not particularly limited, and the flexible flat cable can be produced by a known method. Examples of the above method include the following methods. Using two rolls of the insulating adhesive laminate (typically, a laminate including the substrate film, the coating film of the present invention formed on one surface of the substrate film, and the layer of the hot melt adhesive, preferably the flame-retardant hot melt adhesive, further formed on the surface of the coating film) and using a known flexible flat cable manufacturing apparatus, the insulating adhesive laminate can be fed such that the layers of the hot melt adhesive confront each other, rectangular wires of conductors aligned in parallel meanwhile are sandwiched therebetween, and the layers of the hot melt adhesive can be fused to each other by hot pressing with a hot press roll of the apparatus. A hole can be punched out in the insulating adhesive laminate before the rectangular wires of the conductors are sandwiched, and the reinforcing tape (that is, the laminate of the present invention can be employed, or alternatively, a laminate other than the laminate of the present invention may be used as the reinforcing tape) can be bonded to the punched hole from the substrate film side of the insulating adhesive laminate. Next, both side ends are slit such that a predetermined finished width is obtained, and cutting is performed at the portion of the hole and the reinforcing tape. In this way, a flexible flat cable in which the conductor terminal is reinforced by the reinforcing tape can be completed.

The rectangular wire of the conductor is not particularly limited, and any wire can be used. From the viewpoint of the slidability of the flexible flat cable, the rectangular wire of the conductor may be a soft copper wire or a hard copper wire, or a tin-plated wire or a nickel-plated wire thereof having a thickness of 12-50 µm and a width of 0.2-2 mm.

FIG. 1 is a conceptual cross-sectional view illustrating one embodiment of a flexible flat cable of the present invention. Rectangular wires of conductors 4, 4', 4", and 4‴ are sandwiched by two insulating adhesive laminates each having a coating film of the invention 2 or 2' as an anchor coat on one surface of each of the substrate films 1 and 1' and also a flame-retardant hot melt adhesive layer 3 or 3' on that coating film surface.

### Examples

Hereinafter, the present invention will be described with reference to working examples, but the present invention is not limited thereto.

### Raw materials used

### (A) Acid-modified polypropylene

(A-1) A maleic anhydride-modified polypropylene "TOYO-TAC PMA-KH" (trade name) from Toyobo Co., Ltd., melting point: 77°C, maleic acid-modified amount: 1.8% by mass.

(A-2) A maleic anhydride-modified polypropylene "TOYO-TAC PMA-LE" (trade name) from Toyobo Co., Ltd., melting point: 69°C, maleic acid-modified amount: 3.0% by mass.

(A-3) A maleic anhydride-modified polypropylene "TOYO-TAC PMA-KE" (trade name) from Toyobo Co., Ltd., melting point: 78°C, maleic acid-modified amount: 2.9% by mass.

(A-4) Using a co-rotating twin screw extruder, a blend including 100 parts by mass of a propylene/1-butene random copolymer "TAFMER XM7070" (trade name) from Mitsui Chemicals, Inc., 1.1 parts by mass of a maleic anhydride special grade reagent from FUJIFILM Wako Pure Chemical Corporation, and 3.0 parts by mass of 2,5-dimethyl-2,5-di-(tert-butylperoxy)hexane (organic peroxide) "PERHEXA 25B" (trade name) from NOF Corporation was fed all at once through an inlet at the root of the screw, and melt-kneaded under the conditions of a die exit resin temperature of 200°C and a retention time of 3 minutes (calculated value) to obtain a maleic anhydride-modified polypropylene having a melting point of 75°C and a maleic acid-modified amount of 1.0% by mass.

(A-5) A maleic anhydride-modified polypropylene "TOYO-TAC PMA-T" (trade name) from Toyobo Co., Ltd., melting point: 94°C, maleic acid-modified amount: 2.4% by mass.

### (B) Organic solvent

(B1-1) Toluene.

(B2-1) Ethyl acetate (water solubility 8.3 g).

(B2-2) Methyl ethyl ketone (water solubility 27.5 g).

(B2-3) 2-Propanol (water soluble).

### (C) Curing agent

(C-1) A solution of a compound having two or more epoxy groups in one molecule

diluted with methyl ethyl ketone, "HARDLEN LAE-004" (trade name) from Toyobo Co., Ltd. Solids content (content of the compound): 65% by mass.

(C-2) A compound having two or more isocyanate groups in one molecule "TAKENATE D-170" (trade name) from Mitsui Chemicals, Inc.

### (P) Substrate film

(P-1) A polyethylene naphthalate resin film "Teonex Q83C" (trade name) from Teijin Limited, having a thickness of 25 µm and having one surface subjected to a corona discharge treatment.

(P-2) A polyphenylene sulfide resin film "Torelina #25-3030" (trade name) from Toray Industries, Inc., having a thickness of 25 µm and having one surface subjected to a corona discharge treatment.

(P-3) A polyimide resin film "Kapton 100H" (trade name) from DuPont-Toray Co., Ltd., having a thickness of 25 µm and having one surface subjected to corona discharge treatment.

(P-4) A polyethylene terephthalate resin film "EMBLET S25" (trade name) from Unitika, Ltd., having a thickness of 25 µm and having one surface subjected to a corona discharge treatment.

None of the substrate films (P-1) to (P-4) has an anchor coat. That is, when a coating film is directly formed on any of the corona discharge-treated surfaces and the non-treated surfaces, the substrate film and the coating film are in direct contact with each other and laminated.

### (1) Preparation of coating material (S-1)

Into a polypropylene container "Iboy PP wide-mouth bottle 500 mL" (trade name) available from AS ONE Corporation, 300 g of a mixture including 100 parts by mass of the component (A-1), 570 parts by mass of the component (B-1), and 30 parts by mass of the component (B-2-1) was charged, a sealing tape was applied to screw threads of a mouth portion of the container to tightly close the lid of the container, and the container was hermetically sealed. Thereafter, mixing and stirring were performed for 60 minutes in an environment at a temperature of 23°C using a rocking mill to obtain a coating material (S-1).

The following test of (i) Solubility and (ii) Storage stability 1 were performed. The results are shown in Table 1.

### Preparation of coating materials (S-2) to (S-14)

Coating materials (S-2) to (S-14) were obtained in the same manner as the coating material (S-1) except that the formulation of the mixture was changed as shown in Table 1. The following tests of (i) Solubility and (ii) Storage stability 1 were performed. The results are shown in Table 1. In Table 1 and the following description, the coating materials (S-1) to (S-14) sometimes may be collectively referred to as a coating material (S).

It was considered that coating materials having a productivity (solubility) of B rank in the following test (i) contained a large amount of gel-like material. The following tests regarding storage stability and adhesive strength were omitted for coating materials having a productivity (solubility) of B rank or C rank in the following test (i).

### (i) Solubility

The coating materials (S-1) to (S-14) were visually observed to confirm whether or not an undissolved substance remained. When it was not visually confirmed that an undissolved substance remained, suction filtration of 100 g of the coating material was further attempted using a filter paper "Qualitative Filter Paper No. 2" (trade name) manufactured by Advantec Toyo Kaisha, Ltd.
A: It was not visually confirmed that an undissolved substance remained. In addition, 100 g of the above coating material was able to be filtered without any problems.
B: It was not visually confirmed that an undissolved substance remained. However, when filtration was attempted, clogging occurred, and the entire amount could not be filtered.
C: It was visually confirmed that an undissolved substance remained.

### (ii) Storage stability 1

Each of the coating materials (S-1) to (S-4), (S-6) to (S-7), and (S-10) to (S-14) (i.e., the coating materials having a productivity (solubility) of A rank in the test (i)) was allowed to stand in an environment at a temperature of 25°C for a predetermined time, and then the viscosity was measured using a tuning fork vibro viscometer "SV-10" (trade name) from A & D Company, Limited and evaluated according to the following criteria. In a usage mode in which high storage stability is required (for example, in a case where it is necessary to leave the coating material at room temperature for 3 hours or more), when the evaluation rank of Storage stability 1 of the coating material including components (A) and (B) is C or higher, the coating material can be practically applicable. From the viewpoint of practical applicability, the evaluation rank of Storage stability 1 of the coating material is more preferably B or more, and most preferably A.
A: The viscosity after 3 weeks standing was still 500 mPa s or less.
B: The viscosity after 48 hours standing was 500 mPa·s or less, but the viscosity after standing for 3 weeks was more than 500 mPa s.
C: The viscosity after 3 hours standing was 500 mPa·s or less, but the viscosity after 48 hours standing was more than 500 mPa s.
D: The viscosity was more than 500 mPa·s even after 3 hours standing.

### (2) Preparation of coating material (T-1)

With the coating material (S-1), the component (C-1) was mixed and stirred in an amount of 9.8 parts by mass (6.4 parts by mass in terms of solids content) based on 100 parts by mass of the component (A-1) in the coating material (S-1), to obtain a coating material (T-1). The blending amount of the component (C-1) in terms of solids content is shown in the table.

The following test of (iii) Storage stability 2 was performed. The results are shown in Table 2.

### Preparation of coating materials (T-2) to (T-11)

Coating materials (T-2) to (T-11) were obtained in the same manner as the coating material (T-1) except that at least one of the type of the coating material (S), the type of component (C), or the blending amount of component (C) was changed such that the formulation of the coating material shown in Table 2 was obtained. The following test of (iii) Storage stability 2 was performed. The results are shown in Table 2. The blending amounts of the components (C-1) and (C-2) in terms of solids content are shown in the table.

### (iii) Storage stability 2

Each of the coating materials (T-1) to (T-11) was allowed to stand in an environment at a temperature of 25°C for a predetermined time, and then the viscosity was measured using a tuning fork vibro viscometer "SV-10" (trade name) from A & D Company, Limited and evaluated according to the following criteria. In a usage mode in which high storage stability is required (for example, in a case where it is necessary to leave the coating material at room temperature for 3 hours or more), when the evaluation rank of Storage stability 2 of the coating material including components (A), (B) and (C) is B or higher, the coating material can be practically applicable. From the viewpoint of practical applicability, the evaluation rank of Storage stability 2 of the coating material is more preferably A.
A: The viscosity after 24 hours standing was still 500 mPa s or less.
B: The viscosity after 3 hours standing was 500 mPa·s or less, but the viscosity after 24 hours standing was more than 500 mPa s.
C: The viscosity was more than 500 mPa·s even after 3 hours standing.

### (3) Production of flame-retardant polyolefin-based hot melt adhesive

Using a co-rotating twin screw extruder, a blend including 55 parts by mass of a maleic anhydride-modified polypropylene "FUSABOND P353" (trade name) from Dow Chemical Japan Limited, 35 parts by mass of an ethylene-vinyl acetate copolymer "EVAFLEX V523" (trade name) from DuPont-Mitsui Polychemicals Co., Ltd., 10 parts by mass of a random polypropylene "F-227 D" (trade name) from Prime Polymer Co., Ltd., 54 parts by mass of a bromine-based flame retardant "SAYTEX 8010" (trade name) from Albemarle Japan Corporation, 18 parts by mass of diantimony trioxide "PATOX-M" (trade name) from Nihon Seiko Co., Ltd., and 1 part by mass of an external lubricant "METABLEN L1000P" (trade name) from Mitsubishi Chemical Corporation was melt-kneaded under the condition of a die exit resin temperature of 210°C to obtain a flame-retardant polyolefin-based hot melt adhesive.

### (4) Film formation of flame-retardant polyolefin-based hot melt adhesive

Using the flame-retardant polyolefin-based hot melt adhesive obtained in step (3), an adhesive resin film having a thickness of 40 µm was formed under the condition of a die exit resin temperature of 210°C using a film forming apparatus equipped with a T-die, an extruder, and a winder with a nip system.

### Example 1

The coating material (T-1) was applied onto the corona discharge-treated surface of the substrate film (P-1) using a rod coating method such that the thickness after drying was 1 µm, and dried at a temperature of 100°C to form a coating film. Next, the adhesive resin film obtained in step (4) was stacked on the surface of the coating film, and thermally laminated using a dielectric heat generating laminator to obtain a laminate having a substrate film, a coating film, and an adhesive resin film (i.e., a layer of a flame-retardant polyolefin-based hot melt adhesive) in this order. At this time, the thermal lamination conditions included a preheating temperature of the pressure roll of 110°C, a preheating temperature of the receiving roll of 110°C, a pressure of 0.4 MPa, and a speed of 1.0 m/min. The following tests (iv) and (v) were performed. The results are shown in Table 3.

### Examples 2 to 11

Laminates were obtained in the same manner as Example 1 except that each of the coating materials (T-2) to (T-11) was used instead of the coating material (T-1). The following tests (iv) and (v) were performed. The results are shown in Table 3.

### Examples 12 to 15

Laminates were obtained in the same manner as Example 1 except that the thickness of the coating film was changed to the thickness (thickness after drying) shown in Table 3. The following tests (iv) and (v) were performed. The results are shown in Table 3.

### Examples 16 to 18

Laminates were obtained in the same manner as Example 1 except that each of the substrate films (P-2) to (P-4) was used instead of the substrate film (P-1). The following tests (iv) and (v) were performed. The results are shown in Table 3.

### Examples 19 and 20

Laminates were obtained in the same manner as Example 1 except that the thickness of the coating film was changed to the thickness (thickness after drying) shown in Table 3, and the substrate film (P-2) or (P-3) was used instead of the substrate film (P-1). The following tests (iv) and (v) were performed. The results are shown in Table 3.

### Example 21

A laminate was obtained in the same manner as Example 1 except that the coating material (S-1) (containing no curing agent) was used instead of the coating material (T-1) (containing a curing agent). The following tests (iv) and (v) were performed. The results are shown in Table 3.

### (iv) Adhesive strength 1 (adhesive strength in standard state)

Two strips each having a width of 50 mm and a length of 150 mm were cut out from the laminate such that the machine direction matched the length direction, the two strips were superposed such that the adhesive resin films (i.e., the layers of the flame-retardant polyolefin-based hot melt adhesive) faced each other, and the strips were each pressed by a metal plate preheated to 190°C and a silicone rubber sheet under the conditions of a pressure of 0.3 MPa and a time of 8 seconds to be heat-sealed. After conditioning of the heat-sealed strip was performed in the standard state (temperature: 23°C, relative humidity: 50%) for 24 hours, in the standard-state environment, a test piece having a width of 1 inch (25.4 mm) and a length of 150 mm was taken from the heat-sealed strip such that the machine direction matched the length direction, and the adhesive strength was measured under the conditions of a test speed of 100 mm/min and T-shape peeling (peeling angle 180°). In addition, the peeling interface was visually observed to examine which interface was broken (fracture mode). The meanings of the symbols in the table are as follows.

P material breakage: The substrate film was broken.

HM: Cohesive failure of the layer of the flame-retardant polyolefin-based hot melt adhesive occurred.

P/AC: Peeling occurred at the interface (interlayer) between the substrate film and the coating film.

AC/HM: Peeling occurred at the interface (interlayer) between the coating film and the layer of the flame-retardant polyolefin-based hot melt adhesive.

Adhesive strength 1 above (i.e., adhesive strength in the standard state) may be preferably 10 N/inch or more, more preferably 12 N/inch or more, still more preferably 13 N/inch or more, and even still more preferably 15 N/inch or more.

In the table, "> 16" means that when the failure mode was P material breakage (substrate film was broken), the stress was 16 N/inch or more at breakage of the substrate film.

### (v) Adhesive strength 2 (adhesive strength in a high temperature and high humidity environment)

The adhesive strength was measured using a tensile tester equipped with a thermo-hygrostat. Specifically, after the inside of the thermo-hygrostat was stabilized at a temperature of 105°C and a relative humidity of 50%, a test piece obtained in the same manner as in the above test of (iv) Adhesive strength 1 was set in a jig in the thermo-hygrostat, the temperature in the thermo-hygrostat reached 105°C again and was hold for 10 minutes, after which the adhesive strength was measured under the conditions of a test speed of 100 mm/min and T-shape peeling (peeling angle 180°). In addition, the peeling interface was visually observed to examine which interface was broken (fracture mode). The meaning of each symbol in the table is the same as that of the above test of (iv) Adhesive strength 1.

Adhesive strength 2 above (i.e., adhesive strength in a high temperature and high humidity environment) may be preferably 1 N/inch or more, more preferably 2 N/inch or more, still more preferably 3 N/inch or more, and even still more preferably 4 N/inch or more.

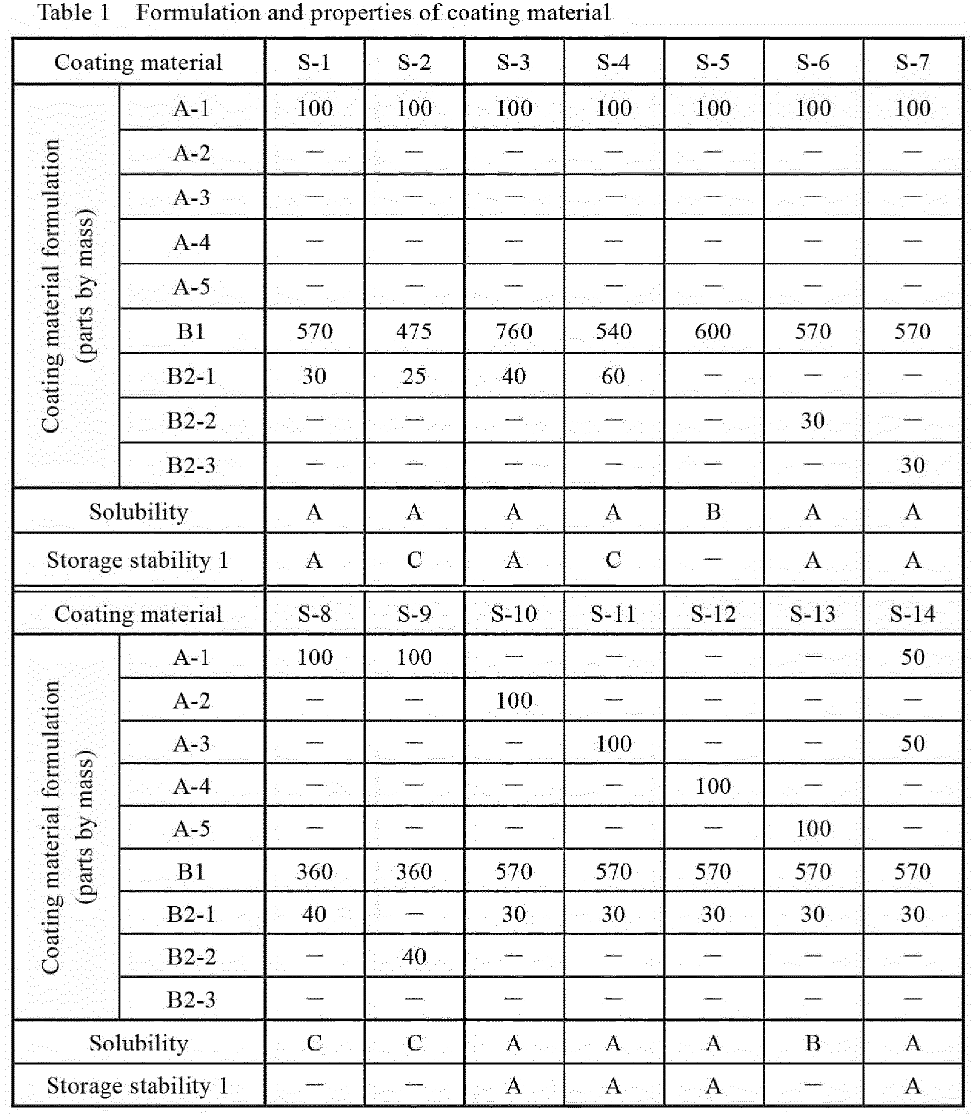

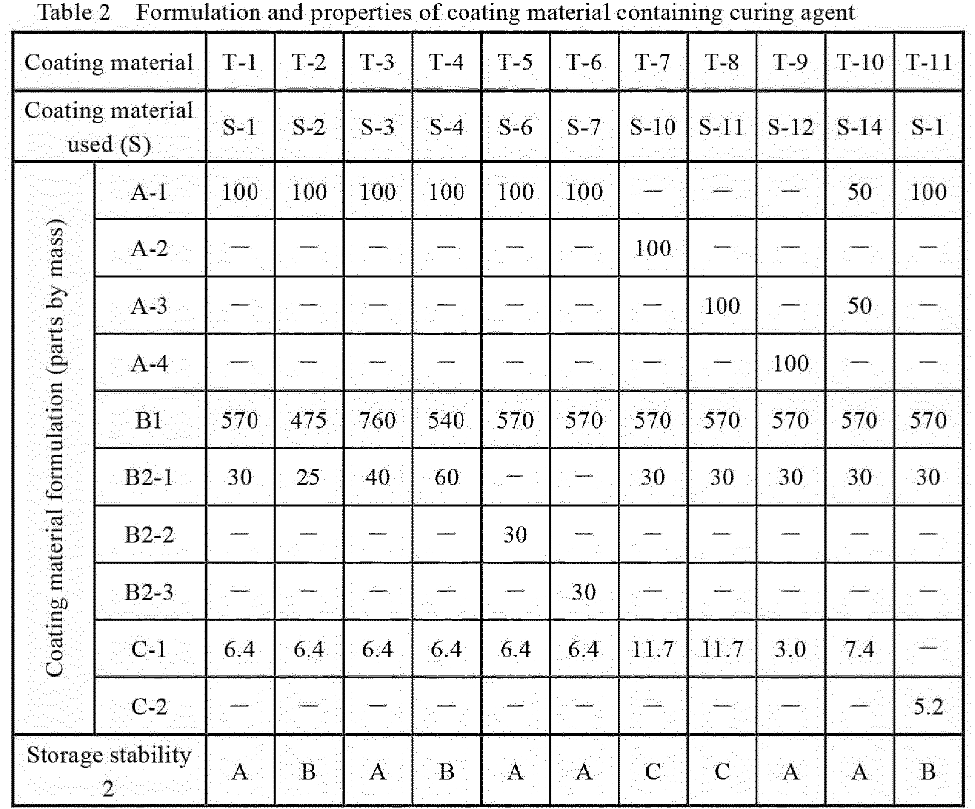

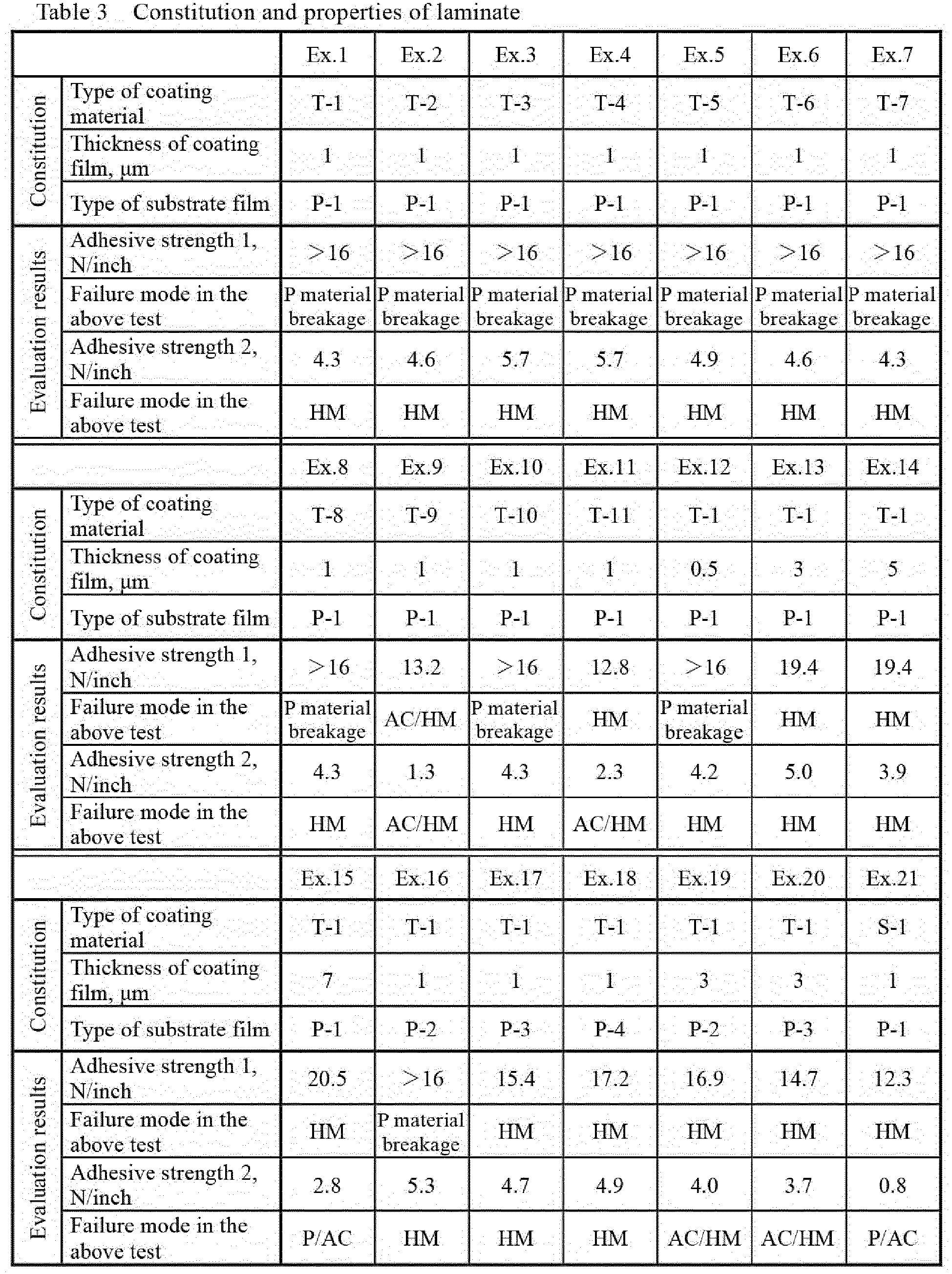

In the above examples, it was demonstrated that a coating film suitable as an anchor coat can be formed by using the coating material of the present invention. The preferred coating material of the present invention was further excellent in storage stability. In the above examples, the coating film of the present invention exhibited excellent adhesive strength to any of the adhesive resin composition layer of the polyolefin-based resin composition, the polyethylene naphthalate resin film, the polyimide resin film, and the polyphenylene sulfide resin film. The preferred coating film of the present invention further exhibited good adhesive strength in a high temperature and high humidity environment to any of the adhesive resin composition layer of the polyolefin-based resin composition, the polyethylene naphthalate resin film, the polyimide resin film, and the polyphenylene sulfide resin film. From the demonstration results in the above examples, it is believed that the coating material of the present invention can be suitably used as a coating material for forming an anchor coat, particularly as a coating material for forming an anchor coat for enhancing the interlayer adhesive strength between an adhesive resin composition layer of a polyolefin-based resin composition of a flexible flat cable cable and a polyethylene naphthalate resin film or the like.

### REFERENCE SIGNS LIST

- 1, 1': Substrate films
- 2, 2': Coating films of present invention as anchor coat
- 3, 3': Flame-retardant hot melt adhesive layers
- 4, 4', 4", 4‴: Rectangular wires of conductors

## Claims

1. A coating material comprising:
(A) 100 parts by mass of an acid-modified polypropylene; and
(B) 450 parts by mass or more of an organic solvent, wherein
the acid-modified polypropylene (A) has a melting point of 90°C or lower, and
the organic solvent (B) comprises:
(B 1) 80-99% by mass of an aromatic hydrocarbon solvent; and
(B2) 20-1% by mass of one or more solvents selected from the group consisting of an ester solvent, a ketone solvent, and an alcohol solvent,
provided that a sum of a blending ratio of the aromatic hydrocarbon solvent (B1) and a blending ratio of the solvent (B2) is 100% by mass.

2. The coating material according to claim 1, further comprising (C) 0.1-20 parts by mass of a compound having, in one molecule, two or more functional groups capable of forming a chemical bond with a carboxyl group.

3. The coating material according to claim 2, wherein the compound (C) having, in one molecule, two or more functional groups capable of forming a chemical bond with a carboxyl group has no hydrolyzable group.

4. The coating material according to any one of claims 1 to 3, wherein
the organic solvent (B) comprises:
(B 1) 92-99% by mass of an aromatic hydrocarbon solvent; and
(B2) 8-1% by mass of one or more solvents selected from the group consisting of an ester solvent, a ketone solvent, and an alcohol solvent.

5. The coating material according to claim 4, wherein (B2) the one or more solvents selected from the group consisting of an ester solvent, a ketone solvent, and an alcohol solvent have a water solubility of 5 g or more or are water soluble.

6. The coating material according to any one of claims 1 to 5, wherein an acid-modified amount of the acid-modified polypropylene (A) is 0.1-2.8% by mass.

7. A coating film formed from the coating material according to any one of claims 1 to 6.

8. The coating film according to claim 7, wherein the coating film has a thickness of 0.05 µm or more and less than 5 µm.

9. A coating film formed from a coating material containing (A) an acid-modified polypropylene in a solids content of 70% by mass or more,
wherein the coating film has a thickness of 0.05 µm or more and less than 5 µm.

10. The coating film according to claim 9, wherein
the coating material containing (A) an acid-modified polypropylene in a solids content of 70% by mass or more comprises:
(A) 100 parts by mass of the acid-modified polypropylene; and
(C) 0.1-20 parts by mass of a compound having, in one molecule, two or more functional groups capable of forming a chemical bond with a carboxyl group.

11. The coating film according to claim 10, wherein the compound (C) having, in one molecule, two or more functional groups capable of forming a chemical bond with a carboxyl group has no hydrolyzable group.

12. A laminate comprising a substrate film and the coating film according to any one of claims 7 to 11 formed on at least one surface of the substrate film,
wherein the coating film is directly formed on the surface of the substrate film.

13. The laminate according to claim 12, wherein the substrate film is a polyethylene naphthalate resin film, a polyimide resin film, or a polyphenylene sulfide resin film.

14. The laminate according to claim 12 or 13, comprising the coating film and an adhesive resin layer in this order on at least one surface of the substrate film.

15. The laminate according to claim 14, wherein the adhesive resin layer is a layer of a polyolefin-based hot melt adhesive.

16. A flexible flat cable comprising the laminate according to any one of claims 12 to 15.
